# EUROPÄISCHE PATENTSCHRIFT

(11) **EP 2 068 006 B1**
(45) Veröffentlichungstag und Bekanntmachung des Hinweises auf die Patenterteilung: **31.08.2011**
(21) Anmeldenummer: 08170001.5
(22) Anmeldetag: 26.11.2008
(51) Int. Cl.: F15B 13/08

(54) **Ventileinheit mit mehreren aneinandergereihten Mehrwegeventilen**
Valve assembly comprising multiple stacked multi-way valve plates
Unité de soupape dotée de plusieurs soupapes multivoies juxtaposées

(30) Priorität: 28.11.2007 DE 102007057609
(43) Veröffentlichungstag der Anmeldung: 10.06.2009
(73) Patentinhaber: Robert Bosch GmbH, 70442 Stuttgart (DE)
(72) Erfinder: Gröner, Jochen, 74950 Scionzier (FR); Schneider, Markus, 01219 Dresden (DE)
(74) Vertreter: Kietzmann, Lutz

(56) Entgegenhaltungen:
- EP-A1- 0 621 407
- EP-A2- 0 715 112
- DE-A1- 10 314 430

## Beschreibung

Die vorliegende Erfindung betrifft eine Ventileinheit mit mehreren aneinandergereihten Mehrwegeventilen, deren Druckmittelspeisung über einen gemeinsamen längsverlaufenden Speisedruckkanal erfolgt, wobei an derselben Frontseite jedes Mehrwegeventils mindestens ein Arbeitsanschluss zum lösbaren Befestigen einer Arbeitsdruckleitung angeordnet ist.

Das Einsatzgebiet derartiger Ventileinheiten erstreckt sich vornehmlich auf pneumatische Anlagen, bei welchen mehrere Druckmittelaggregate - wie Druckmittelzylinder oder Drehantriebe - über Ventile zu beaufschlagten sind. Hierbei hat sich eine platzsparend örtliche Zusammenfassung der mehreren erforderlichen Ventil zu einer kompakten Baueinheit in Form einer Ventileinheit bewährt. Die Ventileinheit bietet insbesondere den Vorteil einer einfachen Montage am Einsatzort sowie eine einfachen Austauschbarkeit defekter Ventile im Reparaturfall.

Aus der DE 103 14 430 A1 geht eine gattungsgemäße Ventileinheit hervor. Die Ventileinheit ist durch Aneinanderreihung mehrerer Ventile unterschiedlicher Ventilfunktionen gebildet. Die einzelnen Ventile werden auf einem je zugeordneten Ventilträgerelement befestigt. Längs durch das Ventilträgerelement verläuft ein zentraler Speisedruckkanal sowie zwei hierzu benachbarte Entlüftungskanäle. Durch diverse Querbohrungen in Richtung der Ventile stehen die Speisedruckkanäle sowie die beiden Entlüftungskanäle mit korrespondierenden Ver-/Entsorgungsanschlüssen seitens der Ventile in Verbindung. Die elektrische Anbindung der einzelnen elektropneumatische Ventile erfolgt hier über eine integrierte elektrische Verkabelung, welche von Ventil zu Ventil durchgeschleift ist.

Ein Nachteil der Zusammenfassung von Ventilen im Rahmen einer Ventileinheit besteht jedoch darin, dass wegen des Aneinanderreihungsprinzips eines Ventils hinter dem anderen Ventil die Baulänge der Ventileinheit direkt abhängt von der Anzahl der hierin vereinten einzelnen Ventile. Es ist daher versucht worden, durch extremen Schmalbau der einzelnen Ventile die Baulänge großer Ventileinheiten zu minimieren. Allerdings geht der Schmalbau der einzelnen Ventile zu Lasten eines möglichst großen Durchflusswertes des Druckmittels durch die Ventile. Zudem sind die einzelnen außen am Ventil angeordneten Anschlüsse für die dort abgehenden Arbeitsleitungen mit zunehmenden Schmalbau nur schwer zugänglich.

Es ist daher die Aufgabe der vorliegenden Erfindung, eine Ventileinheit der gattungsgemäßen Art dahingehend weiter zu verbessern, dass trotz schmalbauender aneinandergereihter Mehrwegeventile eine hohe Durchflussleistung bei zumindest einigen Mehrwegeventilen der Ventileinheit realisierbar ist.

Die Aufgabe wird ausgehend von einer Ventileinheit gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Arbeitsanschlüsse mindestens zweier benachbarter Mehrwegeventile mit einem hieran einsteckbar ausgebildeten Adapterelement versehen sind, an dem ein zu den mehreren Arbeitsanschlüssen korrespondierender Steckanschluss relativ größeren Querschnitts angeordnet ist, um den Durchfluss der benachbarten Mehrwegeventile zusammenzuführen.

Der Vorteil der erfindungsgemäßen Lösung besteht insbesondere darin, dass Ventile desselben Bautyps im Rahmen der Ventileinheit für unterschiedliche Durchflussleistungen nutzbar gemacht werden können. So können besonders großvolumige Druckmittelaggregate ebenfalls mit einer normalen Ventileinheit, welche üblicherweise für normalvolumige Druckmittelaggregate ausgelegt ist, verwendet werden. Bislang waren hierfür Einzelventile erforderlich, welche sich nicht auf einen Steckplatz der Ventileinheit integrieren ließen. Herkömmliche Ventileinheiten sind mit der erfindungsgemäßen Lösung in einfacher Weise nachrüstbar, um Durchflusserhöhungen zu realisieren. Die Position des erfindungsgemäßen Adapterelements ist dabei frei wählbar und es sind insoweit keine speziellen Ventilplatzierungen oder Sonderventile erforderlich.

Vorzugsweise sollten mit einer elektronischen Steuereinheit die mit einem Adapterelement verbundenen Mehrwegeventile zeitlich synchron angesteuert werden. Durch beispielsweise gleichzeitige Bestromung von elektromagnetischen Pilotventilen vorgesteuerter Mehrwegeventile wird eine Optimalerhöhung der Durchflussleistung erzielt. Teilweise zeitliche Überlagerungen in der Bestromung führen dagegen zu speziellen Durchflusscharakteristika, welche für bestimmten Anwendungsfälle gewünscht sein können.

Gemäß einer weiteren, die Erfindung verbessernden Maßnahme ist vorgesehen, dass das Adapterelement angeformte Rohransätze gleicher Ausrichtung zum Einstecken in die Arbeitsanschlüsse der Mehrwegeventile aufweist. Hierdurch ist das Adapterelement als einfaches Steckbauteil ausgebildet, was sich entsprechend einfach montieren oder demontieren lässt. Hierbei korrespondieren die Rohransätze vorzugsweise mit Push-In-Fittings seitens der Mehrwegeventile, so dass zur Demontage die Löseringe aller Push-In-Fittings gleichzeitig betätigt werden müssen. Zur Erleichterung der Demontage wird vorgeschlagen, eine Lösehilfseinrichtung vorzusehen, um ein gleichzeitiges Lösen aller Anschlüsse sicherzustellen. Wird das Gehäuse des Adapterelements als vorzugsweise Kunststoffspritzgussteil ausgeführt, so lassen sich die Rohransätze in einfacher Weise mit anspritzen.

Ausgangsseitig des Adapterelements ist ebenfalls ein Steckanschluss zur Aufnahme einer weiterführenden Arbeitsleitung größeren Durchmessers vorgesehen. Dieser Steckanschluss ist vorzugsweise ebenfalls nach Art eines Push-In-Fittings ausgebildet, um eine leichte Montage oder Demontage der anzuschließenden Arbeitsleitung zu ermöglichen.

Allerdings sollte der Querschnitt des Steckanschlusses am Adapterelement vorzugsweise einen wirksamen Querschnitt besitzen, der in etwa der Summe der wirksamen Querschnitte der korrespondierenden Rohransätze entspricht. Als wirksamer Querschnitt ist hierbei der für den Durchfluss des Druckmittels zur Verfügung stehende Rohrleitungsquerschnitt gemeint. Durch dieses Querschnittsverhältnis kann sichergestellt werden, dass das Adapterelement keine Engstelle beim Zusammenführen der Durchflüsse der miteinander gekoppelten Mehrwegeventile bildet.

Eine weitere, die Erfindung im Hinblick auf einen maximalen Durchfluss verbessernde Maßnahme besteht darin, dass die Verlaufsrichtung der Rohransätze des Adapterelements mit der Verlaufsrichtung des mindestens einen Steckanschlusses und damit der hieran anschließbaren Arbeitsleitung übereinstimmt. Es werden damit strömungstechnisch ungünstige Richtungsänderungen des strömenden Mediums vermieden. Die im Inneren des Adapterelements ausgebildete Zusammenführung der Teilströme ist strömungsoptimal ausgebildet.

Gemäß einer bevorzugten Ausführungsform der Erfindung wird das Adapterelement auf gewöhnlich zwei vorhandene Arbeitsanschlüsse eines Mehrwegeventils angepasst. Denn übliche Mehrwegeventile, die als 5/2-Wegeventil oder 2x3/2-Wegeventil ausgebildet sind, bedienen zwei Arbeitsabschlüsse, welche benachbart an der Frontseite des Mehrwegeventils angeordnet sind. Das hierauf angepasste Adapterelement weist hierzu je zwei korrespondierende Rohransätze auf. Werden vorzugsweise die Teilströme zweier benachbarter Mehrwegeventile zusammengeführt, so weist das hierzu passende Adapterelement also insgesamt vier Rohransätze auf und es werden zwei Teilströme parallelintern zusammengefasst. Dementsprechend sind am Adapterelement zwei Steckanschlüsse relativ größeren Querschnitts zum Anschluss an die weiterführenden Arbeitsleitungen vorgesehen.

Weitere, die Erfindung verbessernde Maßnahmen werden nachstehend gemeinsam mit der Beschreibung der bevorzugten Ausführungsform anhand der Figuren näher dargestellt. Es zeigt:
- Fig.1: eine perspektivische Ansicht einer Ventileinheit mit mehreren aneinandergereihten Mehrwegeventilen,
- Fig.2: eine perspektivische Ansicht von vom eines Adapterelements zum Zusammenführen des Durchflusses benachbarter Mehrwegeventile, und
- Fig.3: eine perspektivische Ansicht hinten des Adapterelements nach Fig.2.

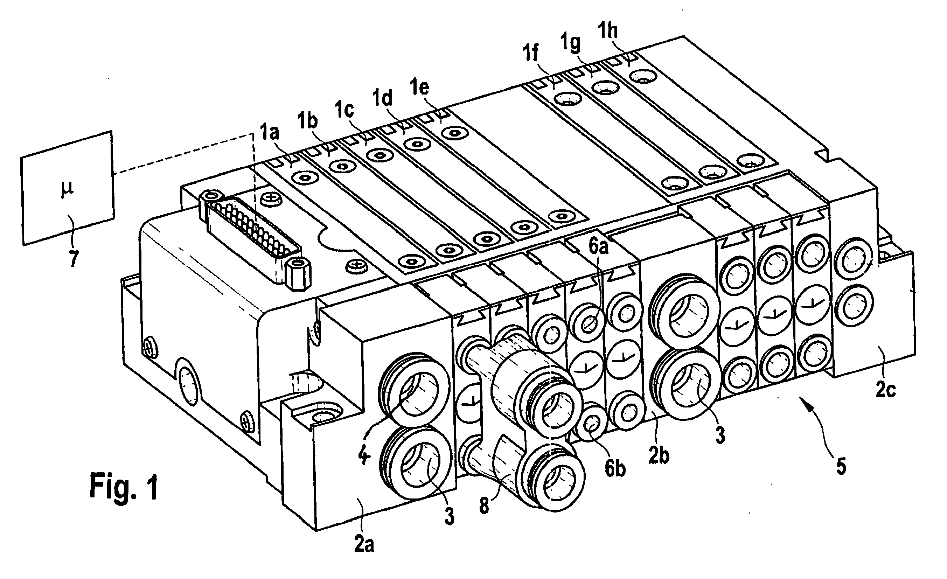

Gemäß Fig.1 besteht die Ventileinheit aus mehreren aneinandergereihten Mehrwegeventilen 1a-1h, wobei im Verbund der Ventileinheit insgesamt drei Einspeiseplatten 2a-2c vorgesehen sind. An den Einspeiseplatten 2a und 2b sind äußere Anschlüsse 3 zur Befestigung eines - nicht weiter dargestellten - Entlüftungsfilters oder entsprechender Leitungen angebracht, wogegen die Endplatte 2c zur Druckmittelspeisung über gemeinsam verlaufende Speisedruckkanäle 4 vorgesehen ist. Alle Anschlüsse sind bei dieser Ventileinheit an einer gemeinsamen Frontseite 5 angeordnet. Dabei besitzt jedes Mehrwegeventil 1a-1h jeweils zwei Arbeitsanschlüsse 6a und 6b, an welchen jeweils - nicht weiter dargestellt - Arbeitsdruckleitungen über Push-In-Fittings einsteckbar sind.

Die elektrische Ansteuerung der Ventileinheit erfolgt über eine - hier nur schematisch angedeutete elektronische Steuereinheit 7, welche über elektrische Anschlussmittel die ventileinheitsinteme Bestromung der jedem Mehrwegeventil 1a-1h zugeordneten elektropneumatischen Pilotventil bestimmt.

Die Arbeitsanschlüsse zweier benachbarter Mehrwegeventile 1a und 1b sind mit einem hierin einsteckbar ausgebildete Adapterelement 8 versehen.

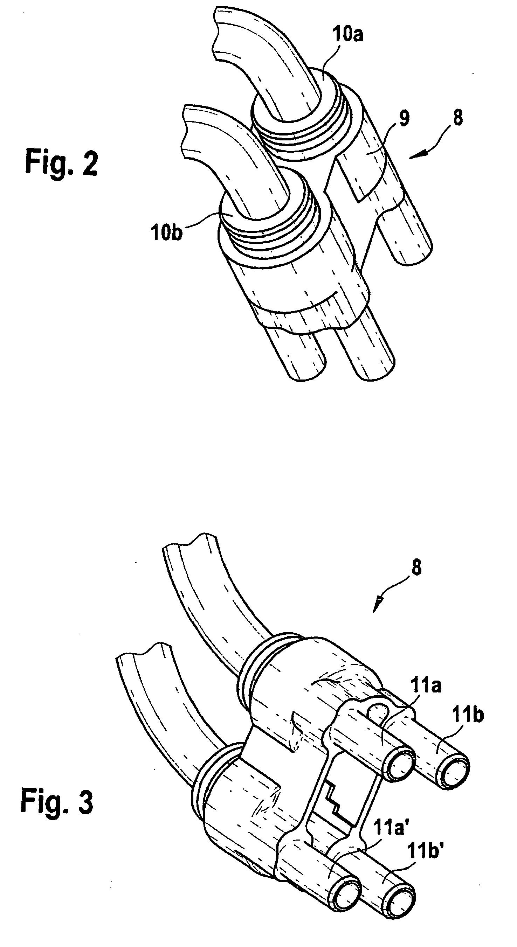

Gemäß Fig.2 sind an einem einstückigen als Kunststoffspritzgussteil hergestellten Gehäuse 9 des Adapterelements 8 zwei Steckanschlüsse 10a und 10b relativ großen Querschnitts (im Vergleich mit den Steckanschlüssen am Mehrwegeventil) ausgebildet, um den Durchfluss benachbarter Mehrwegeventile 1a und 1b zusammenzuführen.

Gemäß Fig.3 besitzt das Adapterelement 8 insgesamt vier angeformte Rohransätze 11a, 11b und 11a', 11b' gleicher Ausrichtung, welche zum Einstecken an die - hier nicht weiter dargestellte - Arbeitsanschlüsse der Mehrwegeventile 1a und 1b vorgesehen sind. Dabei werden durch die Rohransätze 11a und 11b ein Paar benachbarter Arbeitsanschlüsse der Mehrwegeventile 1a und 1b zusammengefasst, wogegen über die anderen Rohransätze 11a' und 11b' das verbleibende Paar der Arbeitsanschlüsse der benachbarten Mehrwegeventile 1a und 1b zusammengefasst werden.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, mit dem erfindungsgemäßen Adapterelement bei entsprechender Mehrfachanordnung auch mehr als zwei benachbarte Mehrwegeventile durchflussmäßig zusammenzuführen. Ebenso ist es denkbar, mit einem Adapterelement lediglich ein Paar von Arbeitsanschlüssen benachbarter Mehrwegeventile zusammenzuführen, falls spezielle Anwendungsfälle dies erforderlich machen.

### Bezugszeichenliste

- 1: Mehrwegeventil
- 2: Einspeiseplatte
- 3: Entlüftungsanschluss
- 4: Speisedruckkanal
- 5: Frontseite
- 6: Arbeitsanschluss
- 7: Steuereinheit
- 8: Adapterelement
- 9: Gehäuse
- 10: Steckanschluss
- 11: Rohransatz

## Patentansprüche

1. Ventileinheit mit mehreren aneinandergereihten Mehrwegeventilen (1a-1h), deren Druckmittelspeisung über einen gemeinsamen längsverlaufenden Speisedruckkanal (4) erfolgt, wobei an derselben Frontseite (5) jedes Mehrwegeventils (1a-1h) mindestens ein Arbeitsanschluss (6a; 6b) zum lösbaren Anschließen einer Arbeitsdruckleitung angeordnet ist, **dadurch gekennzeichnet, dass** die Arbeitsanschlüsse (6a; 6b) mindestens zweier benachbarter Mehrwegeventile (1a; 1b) mit einem hierin einsteckbar ausgebildeten Adapterelement (8) versehen sind, an dem ein zu den mehreren Arbeitsanschlüssen (6a; 6b) korrespondierender Steckanschluss (10a; 10b) relativ größeren Querschnitts angeordnet ist, um den Durchfluss der benachbarten Mehrwegeventile (1a-1b) zusammenzuführen.

2. Ventileinheit nach Anspruch 1,
**dadurch gekennzeichnet, dass** eine elektronische Steuereinheit (7) die mit einem Adapterelement (8) verbundenen Mehrwegeventile (1a; 1b) zeitlich synchron ansteuert.

3. Ventileinheit nach Anspruch 1,
**dadurch gekennzeichnet, dass** das Adapterelement (8) angeformte Rohransätze (11a, 11b; 11a', 11b') gleicher Ausrichtung zum Einstecken in die Arbeitsanschlüsse (6a; 6b) der Mehrwegeventile (1a-1b) aufweist.

4. Ventileinheit nach Anspruch 3,
**dadurch gekennzeichnet, dass** sich der wirksame Querschnitt des Steckanschlusses (10; 10b) am Adapterelement (8) aus der Summe der wirksamen Querschnitte der korrespondierenden Rohransätze (11a, 11b; 11a', 11b') ergibt.

5. Ventileinheit nach Anspruch 1,
**dadurch gekennzeichnet, dass** der Steckanschluss (10a; 10b) genauso wie die Arbeitsanschlüsse (6a; 6b) an den Mehrwegeventilen (1a-1h) als Push-In-Fitting ausgebildet ist.

6. Ventileinheit nach Anspruch 1,
**dadurch gekennzeichnet, dass** an der Frontseite (5) jedes Mehrwegeventils (1a-1h) genau zwei Arbeitsanschlüsse (6a; 6b) angeordnet sind, und dass am Adapterelement (8) hierzu je zwei korrespondierende Steckanschlüsse (10a; 10b) vorgesehen sind.

7. Ventileinheit nach Anspruch 3,
**dadurch gekennzeichnet, dass** die Verlaufsrichtung der Rohransätze (11a, 11b; 11a', 11b') übereinstimmt mit der Verlaufsrichtung des mindestens einen Steckanschlusses (10a; 10b) am Adapterelement (8) ist.

8. Ventileinheit nach Anspruch 1,
**dadurch gekennzeichnet, dass** das Adapterelement (8) ein einstückiges Gehäuse (9) aufweist, welches als Kunststoffspritzgussteil ausgeführt ist.

## Claims

1. A valve unit, comprising a plurality of series-connected multiport valves (1a-1h), having pressurized medium fed via a common, longitudinally-extending feed pressure channel (4), wherein, on the same front surface (5) of each multiport valve (1a-1h), at least one working port (6a; 6b) is arranged to enable releasable coupling of a working pressure line, **characterised in that** the working ports (6a; 6b) of at least two adjacent multiport valves (1a; 1b) are provided with an adapter element (8) configured to be plugged therein, at which a plug-in connection (10a; 10b) of relatively large cross-section is arranged corresponding to the plurality of working ports (6a; 6b), to combine the flow of the adjacent multiport valves (1a-1b).

2. The valve unit according to claim 1,
**characterised in that** an electronic control unit (7) synchronously drives the multiport valves (1a; 1b) connected to an adapter element (8).

3. The valve unit according to claim 1,
**characterised in that** the adapter element (8) has integrally formed tube connectors (11a, 11b; 11a', 11b') in the same orientation for plugging into the working ports (6a; 6b) of the multiport valves (1a-1b).

4. The valve unit according to claim 3,
**characterised in that** the effective cross-section of the plug-in connection (10; 10b) at the adapter element (8) results from the sum of the effective cross-sections of the corresponding tube connectors (11a, 11b; 11a', 11b').

5. The valve unit according to claim 1,
**characterised in that** the plug-in connection (10a; 10b), just like the working ports (6a; 6b) on the multiport valves (1a-1h), is configured as a push-in fitting.

6. The valve unit according to claim 1,
**characterised in that** exactly two working ports (6a; 6b) are arranged at the front surface (5) of each multiport valve (1a-1h), and **in that** two plug-in connections (10a; 10b) corresponding thereto are provided at each adapter element (8).

7. The valve unit according to claim 3,
**characterised in that** the direction of extension of the tube connectors (11a, 11b; 11a', 11b') coincides with the direction of extension of the at least one plug-in connection (10a; 10b) on the adapter element (8).

8. The valve unit according to claim 1,
**characterised in that** the adapter element (8) has a one-piece housing (9), which is formed as an injection molded plastic part.

## Revendications

1. Unité à soupape comprenant plusieurs soupapes multivoies (1a-1h) disposées en rangées les unes contre les autres, dont l'alimentation en fluide sous pression a lieu via un canal d'alimentation en pression (4) commun s'étendant longitudinalement, dans laquelle au moins un raccord de travail (6a ; 6b) est agencé sur la même face frontale (5) de chaque soupape multivoies (1a-1h) en vue du raccordement détachable d'une conduite à pression de travail,
**caractérisée en ce que** les raccords de travail (6a ; 6b) d'au moins deux soupapes multivoies (1a ; 1b) voisines sont dotés d'un élément adaptateur (8) réalisé de manière à pouvoir y être enfiché, élément adaptateur sur lequel est agencé un raccord enfichable (10a ; 10b), de section relativement importante, correspondant aux plusieurs raccords de travail (6a ; 6b), afin de regrouper le débit traversant les soupapes multivoies (1a-1b) voisines.

2. Unité à soupape selon la revendication 1,
**caractérisée en ce qu'**une unité de commande électronique (7) pilote les soupapes multivoies (1a ; 1b) reliées à un élément adaptateur (8) de façon synchrone dans le temps.

3. Unité à soupape selon la revendication 1,
**caractérisée en ce que** l'élément adaptateur (8) comporte des souches tubulaires conformées (11a, 11b ; 11a', 11b') de même orientation pour l'enfichage dans les raccords de travail (6a ; 6b) des soupapes multivoies (1a-1b).

4. Unité à soupape selon la revendication 3,
**caractérisée en ce que** la section efficace du raccord enfichable (10 ; 10b) sur l'élément adaptateur (8) résulte de la somme des sections efficaces des souches tubulaires (11a, 11b ; 11a', 11b').

5. Unité à soupape selon la revendication 1,
**caractérisée en ce que** le raccord enfichable (10a ; 10b) est réalisé, tout comme les raccords de travail (6a ; 6b) sur les soupapes multivoies (1a-1h) sous forme de raccords dits "Push-in" ("à engager par poussée").

6. Unité à soupape selon la revendication 1,
**caractérisée en ce qu'**exactement deux raccords de travail (6a ; 6b) sont agencés sur la face frontale (5) de chaque soupape multivoies (1a-1h), et **en ce que** deux raccord enfichable correspondants à ceux-ci (10a ; 10b) sont respectivement prévus sur l'élément adaptateur (8).

7. Unité à soupape selon la revendication 3,
**caractérisée en ce que** le la direction du tracé des souches tubulaires (11a, 11b ; 11a', 11b') coïncide avec la direction du tracé dudit au moins un raccord enfichable (10a ; 10b) sur l'élément adaptateur (8).

8. Unité à soupape selon la revendication 1,
**caractérisée en ce que** l'élément adaptateur (8) comprend un boîtier d'une seule pièce (9), qui est réalisé sous forme de pièce en matière plastique moulée par injection.
